# EUROPEAN PATENT APPLICATION

(11) **EP 2 335 987 A1**
(43) Date of publication of application: **22.06.2011**
(21) Application number: 10195108.5
(22) Date of filing: 15.12.2010
(51) Int. Cl.: B60R 25/00, H04L 29/06

(54) **A network component security system**

(30) Priority: 18.12.2009 US 641976
(71) Applicant: NXP B.V., 5654 AG Eindhoven (NL)
(72) Inventor: Strieder, Frank, 5656 AE, Eindhoven (NL)
(74) Representative: Schouten, Marcus Maria

(57) **Abstract**

A method and system (500) for controlling access to a network is disclosed. This is done by identifying a component attached to the network (410), determining whether the identified component requires special access to the network (420) and providing an indication (450) when the identified component is identified as requiring special access to the network and fails to satisfy a criterion for such special access (430) .

## Description

The present invention relates to the field of networks and more particularly to a system for managing and controlling access of components onto the network.

In the field of mechanical repairs, such as automotive and other forms of transport systems, the need for high quality parts is important to the successful repair and satisfaction of the customer. In many cases, third party manufactures have developed parts that may be used in many types of vehicles. However, these parts may not be held to the same strict standards of the automotive manufacturers thus their quality is questionable, and customers using such parts may be frustrated when they do not work properly. Hence, many automotive manufacturers recommend their own line of parts be used in repairing their vehicles. These manufacturers have subjected their own line of parts to their strict standards of quality and reliability, which the customer has come to rely upon. Poor quality parts and parts that are reproduced by product piracy have undercut the reputation of many manufacturers and causes significant financial loss to suppliers.

Moreover, when repairs are made to an automobile, the vehicle owner typically wants the best quality parts. However, it is well-known that repairs may be made with lower quality parts or with parts that have been stolen from a similar vehicle. In many such cases, the vehicle owner may not be aware that lower quality or even stolen parts were used in the vehicle repair.

Hence, there is a need for a system that allows for the management and accounting of parts or components within a system that provides a user with knowledge regarding the quality of the parts or components as well as deterring piracy activities.

As described herein, the embodiments of the present invention overcome one or more of the above or other disadvantages known in the art.

One aspect of the present invention relates to a method for controlling access to a network by identifying a component coupled to or in communication with the network; determining whether the identified component requires special access to the network; and providing an indication when the identified component is identified as requiring special access to the network and fails to satisfy at least one criterion necessary for obtaining such special access.

Another aspect of the present invention provides a system for controlling access to a network which includes a processor and memory for determining whether access is allowed based on a limited control access control signal.

Another aspect of the present invention provides an interface that receives inputs and determines whether access is allowed based on a limited control access control signal.

These and other aspects and advantages of the present invention will become apparent from the following detailed description considered in conjunction with the accompanying drawings.

In the Figures:
Fig. 1 illustrates a conventional CAN system;
Figs. 2A-2C illustrate block diagrams of an exemplary circuits in accordance with the principles of the invention;
Fig. 3 illustrates an exemplary method of implementing the processing shown in Fig. 2;
Figs. 4A and 4B illustrate a flow chart of the processing shown herein; and
Fig. 5 illustrates an exemplary system for implementing the processing shown herein.

It is to be understood, however, that the drawings are designed solely for purposes of illustration and not as a definition of the limits of the invention, for which reference should be made to the appended claims. Moreover, the drawings are not necessarily drawn to scale and, unless otherwise indicated, they are merely intended to conceptually illustrate the structures and procedures described herein.

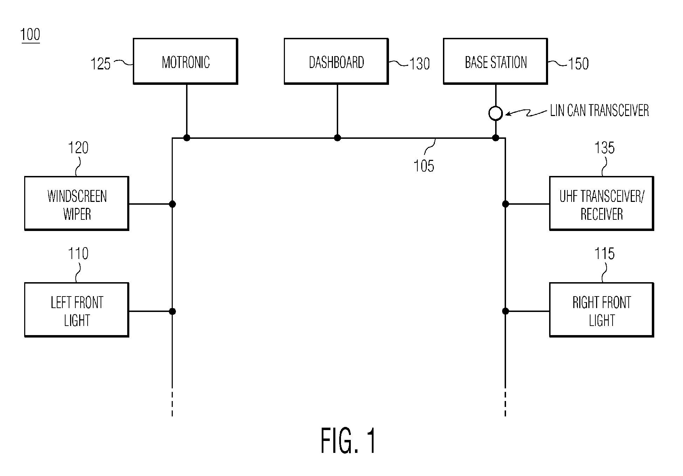

Fig. 1 illustrates a conventional CAN (Controlled Access Network) having a plurality of devices connected to a communication network and whereto the teachings of the present invention may be applied. Physical connection to the network may be through common, well-known interfaces or through dedicated, proprietary interfaces. The CAN network or bus is a standard for today's automobiles in providing communication among different elements of the vehicle (and it will be appreciated that such a network also could be used in other types of vehicles). The CAN bus is organized into message boxes, wherein the message boxes have different priorities for bus access. This is desirable to guarantee dedicated bus response times in order to have the bus usable for real time applications. As shown in Fig. 1, the front left and front right headlights 110, 115, respectively, may be connected to the CAN bus 105. In addition, the windshield wiper blades 120, a motor control Body Control Unit (BCU) 125 (one example of which is the Motronic engine management system of Robert Bosch, GmbH), a dashboard 130, and an UHF transceiver 135 (e.g., satellite radio) may be connected to the CAN bus. These illustrated units, and other similar units that either provide direction to or receive direction from base station 150 (or both), may be connected to the CAN 105. Other devices, such as well-known sensors (not shown) may provide information to the CAN bus 105, for example, to inform the base station 150 that an error exists in the braking system. In addition, the wipers 120 may receive commands from the base station 150 to be turned on and/or off. For example, a rain detecting unit (not shown) may provide information to the base station 150 and the base station 150 may use that information to activate the wipers 120 automatically. Or the base station 150 may receive a signal from a wiper actuation switch (not shown) initiated by a user leading to the wipers being turned on or off. As would be recognized, the base station represents an example of a device that can be connected over a CAN-LIN bridge with the CAN network. Thus not only CAN devices may be supported by the CAN bus, but also other types of devices. For example, the base station may physically represent a security based car-key, which enhances the existing security system.

In accordance with the principles of the present invention, some of the devices or components in communication via the CAN 100 may be termed "Smart" devices whose performance or cost is deemed significant and thus, their presence on the network is to be monitored. For example, the front headlights 110, 115 may be deemed Smart devices and, thus, special monitoring of these devices is warranted. Similarly, the BCU 125, the dashboard 130 and the UHF transceiver 135 are preferably deemed Smart devices. Each of these Smart devices is provided with additional circuitry or processing capability as will be described herein. In another aspect of the invention, each device could have their own security features and may communicate with each other such that no base station is needed to determine an incorrect part.

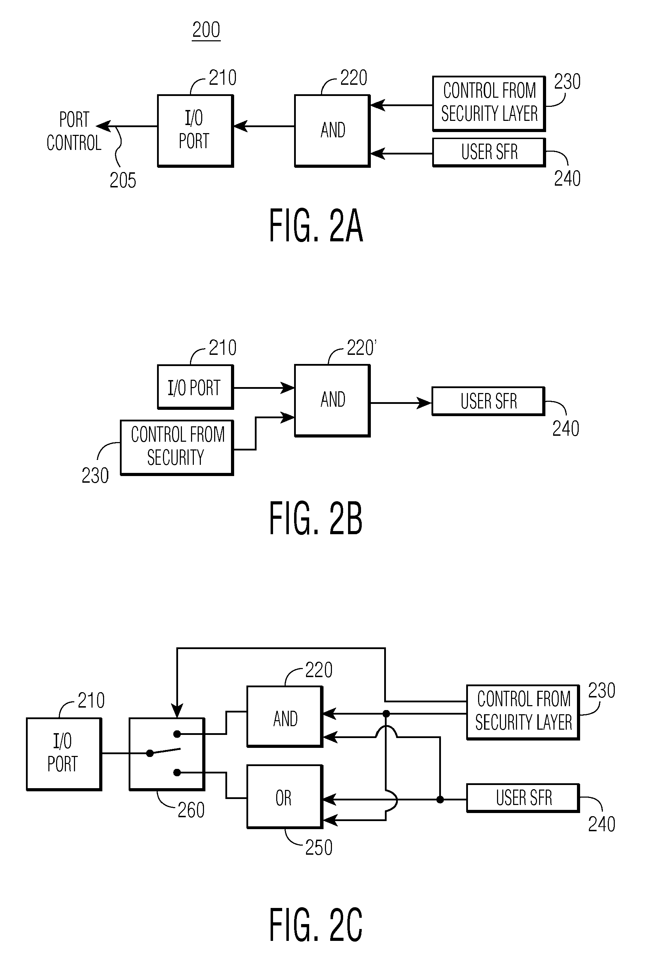

Fig. 2A illustrates a block diagram of an exemplary embodiment of the invention. In the illustrated embodiment a security layer is imposed at the Input/Output (I/O) level by connecting I/O port 210 to a security feature (gate structure) 220. The security feature receives a security level input, referred to as a "limit access control" signal 230, and an output of a device 240, referred to as user SFR (software). The output of I/O port, referred to as "port control" 205 is determined by the status of the output of a control signal from the security layer 230. The output of the security feature 220, which may be one of an acceptance or rejection of the input from the user software 240. That is, if the device associated with the user software 240 is allowed access to the network then the output of output of the device is provided to a customer application software for further processing (not shown) when the port control signal indicates accessibility. The customer application accepts the provided output and determines further processing associated with the port control signal as required. The "limit access control" signal provided by the security layer 230 is mapped only for devices that require security enabled access to the network. Otherwise, the security software layer 230 is able to block the outputs of the security feature device 220 Accordingly, without working outputs from the I/O port module 210, the module or device 240 is denied access to the network and, hence, rendered unusable. For example, when a device is plugged into the network, the security-software layer 230, if required, writes an access allowed value (e.g., a "1") when the customer software should continue processing inputs from the device and writes an access denied value (e.g., a "0") if the customer software should not continue processing inputs for the device and the operation of the device should be blocked or halted.

The security feature 220 need not be incorporated into each component on the network. That is, there is no need for every bus participant (i.e., component) to have this security feature. Referring to Fig. 1, the base station 150 is not equipped with the security feature (although such a security feature could be provided). However, the motor control BCU 125 uses the additional security feature. Similarly, the front headlights 110, 115 may use this security feature, while the windshield wipers 120 are not equipped with this feature.

With the incorporation of the security feature 220, when a right front headlight 115, for example, is exchanged for an unauthorized replacement headlight, then a warning message may be provided to the dashboard that an improper product is connected to the vehicle and that it should be replaced. In one aspect, if the user fails to respond to the warning message, the base station 150 may, when an appropriate time or condition is detected, cause the improper unit to stop working. For example, if the unauthorized replacement for the front headlight is deemed to be improper, say, because its electrical properties are improper and jeopardize the vehicle, and the improper message is ignored for a predetermined period of time, the base station 150 may cause the front headlight to stop working if the time of day corresponds to daytime and the vehicle is not in operation (meaning it is safe to disable that headlight). That is, the operation of the device may be halted after the indicator has been provided for a known period of time and the halting operation would not cause a safety issue. Also, the operation of a navigation system may be halted after an indicator has been provided for a predetermined period of time, as no safety issue would be involved. Furthermore, halting of the operation of one or more elements of the vehicle lighting system, e.g., headlights, turn indicators, and so on may be delayed if the vehicle is in motion and a time of day corresponds to night time. In this case, the lighting is deemed desirable. Alternatively, if the vehicle is in motion and a time of day corresponds to day time, the front headlight would not be essential although the turn indicators would be essential. Thus, operation of the front headlights could be halted after the indicator has been provided for a predetermined period of time, but halting the operation of the turn indicators could be delayed until the vehicle has come to a stop for a predetermined period of time. Similarly, sensors associated with the braking system may be halted only after the vehicle has been stopped for a predetermined period of time after the indicator has been provided for the predetermined period of time. In each of the foregoing instances, it will be appreciated that the expression "predetermined period" has been used generally and does not require those periods to be the same. Thus, each element may have its own criterion (criteria) for determining the conditions under which the operation of an improper element may be halted. For example, each headlight could have an associated Body Control Unit or both headlights could share the same component (headlight BCU), and the headlight BCU could contain the information that is used to prevent headlight operation without the need for a base station (generally, a base station communicates with a car key).

Next, one manner in which this invention prevents operation of a device is disclosed. Referring to Fig. 2A, the IO-Port 210 may represent a pin on an integrated circuit (e.g., Application Specific Integrated Circuit (ASIC)) that includes a drive structure. In this case if the security layer is writing a device allowable value through input 230 (e.g., a one) the user data will be presented on the port. However, if the security layer is outputting another value (e.g., a zero) the AND gate 220 will generate a zero value regardless of the userSFR (software) 240 that is employed Accordingly, the device will be blocked from being used.

Fig. 2B illustrates a block diagram of another embodiment of the invention, wherein the control signal from the security layer 230 is provide to a security feature 220', similar to that shown in Fig. 2A. In this exemplary embodiment signals from the network (not shown) may be allowed or denied passage to a corresponding device / user SFR 240, based on a limited access control in a manner similar to that described with regard to Fig. 2A. In this exemplary embodiment, communication with a device 240 and the network may be denied when the security layer indicates that such communication is not to be performed.

Fig. 2C illustrates a block diagram of another exemplary embodiment of the invention, wherein switch 260 is incorporated to determine which of the illustrated paths may be connected to the I/O port 210. In one aspect of the invention, when limited network access is required for a corresponding device, switch 260 may be configured to create a path through security feature 220 between device / User SFR 240 and I/O port 210. In this configuration, only devices that satisfy the security layer requirements are allowed access to the network (not shown). However, when switch 260 is positioned to configure a path through feature 250 (such as an OR gate) between device 240 and I/O port 210, then all devices are allowed access to the network.

In addition, the configuration shown in Fig. 2C is advantageous as it allows a manufacturer, for example, to determine the condition for allowance to the network. That is, access may be allowed when the security layer outputs a "0" or a "1." This provides flexibility to the manufacturer in establishing the conditions for access.

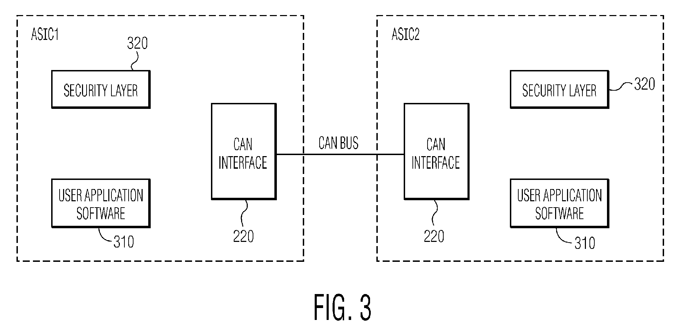

Fig. 3 illustrates a block diagram of a connection between different components in communications over a bus (CAN Bus). In this illustrated embodiment a CAN interface 220 is attached to the CAN bus 105. The CAN interface 220 is attached to a user application software 310 and a security layer 320. In this illustrated embodiment, a user application software 310 is generally operating on a processor system (not shown). In this illustrated embodiment, the user application software 310 is operating in an Application Specific Integrated Circuit (ASIC), which is a programmable dedicated hardware unit. It would be recognized by artisans that an ASIC or a Field Programmable Gate Array (FPGA) may be used as a bus interface because of the ability to operate and process information in real-time. However, it would be recognized by artisans that the interface and processing may be included within a general purpose computer, which when loaded with, or which has access to, code suitable to implement the processor shown herein, the general purpose computer is transformed into a special purpose computer, performing, in part, the processing shown herein. The use of software for controlling access is advantageous as it provides control of the hardware such that a user (manufacturer) has the freedom to define different states of operation of the devices.

In accordance with the principles of the invention, the user application software 310 is operating as a high priority task and the security layer 320 is operating as a lower priority task to avoid interference with the applications that may be operating. In one aspect of the invention, the security layer 320 may include a key that is pre-loaded based on the one or more characteristics of the vehicle (e.g., type of vehicle, model, year, etc.). The key may be loaded during the manufacture of the vehicle. The security software may contain a list of components that require interaction with the security software. The list may further include an identification value or a range of identification values that may be assigned to each of the components requiring interaction with the security software. The identification value may represent a part number, a manufacturer identification, a vehicle identification number, a code value, a serial number, a date of manufacture, or combinations of these values, as well as other suitable values. In this manner, the security software may then be able to identify when parts are removed from the network or when improper parts are added to the network.

Although the invention has been described with regard to an automotive system (e.g., vehicle identification number), it would be recognized that the invention may also be applicable to other types of transportation systems (e.g., trains, planes, motorcycles, etc.) and other types of networks where security access is desired.

In one aspect of the invention, the manufacturer may provide the part identification values to known third party manufacturers so that those known third party manufacturers may provide parts that are acceptable to the vehicle manufacturer and which can therefore be used. In one aspect of the invention, the keys may be loaded at random times or periodically, through an internet connection, for example. The updated list may further include a list of identification values that represent parts that have been stolen or which are unacceptable, say, because they can function in a manner that endangers the vehicle (other considerations precluding the use of particular components use also could apply). In this manner, stolen parts, which are original manufacturer parts, and thus include acceptable identification values, may be indentified and their presence indicated to the vehicle operator. This is advantageous as it removes the ability of thieves and sellers of the stolen parts to represent those stolen original manufacturer parts as original equipment. In another aspect, the parts may be in a "virgin" mode, such that when the parts are placed together, a network identification may be formulated which represents the original part identification and the created network identification. Thus, when new parts, in their virgin state, are included into network, a process may be performed that verifies the part and then assigns a network identification to the new part. In this manner, parts that have come from similar vehicles may be quickly identified and traced back to the original vehicle. Thus, it may be determined whether the part has been stolen from another vehicle or whether the part was salvaged from a disabled or abandoned vehicle. This is advantageous in that it reduces the value of parts that are stolen from vehicles and sold to vehicle repair shops that use such parts in the repair of vehicles, and so can be a deterrent to crime.

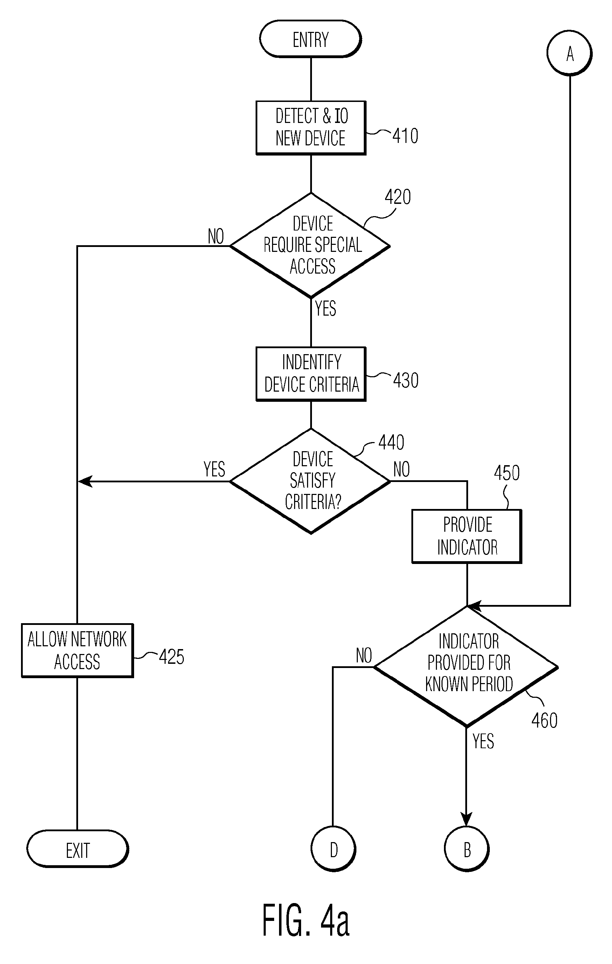

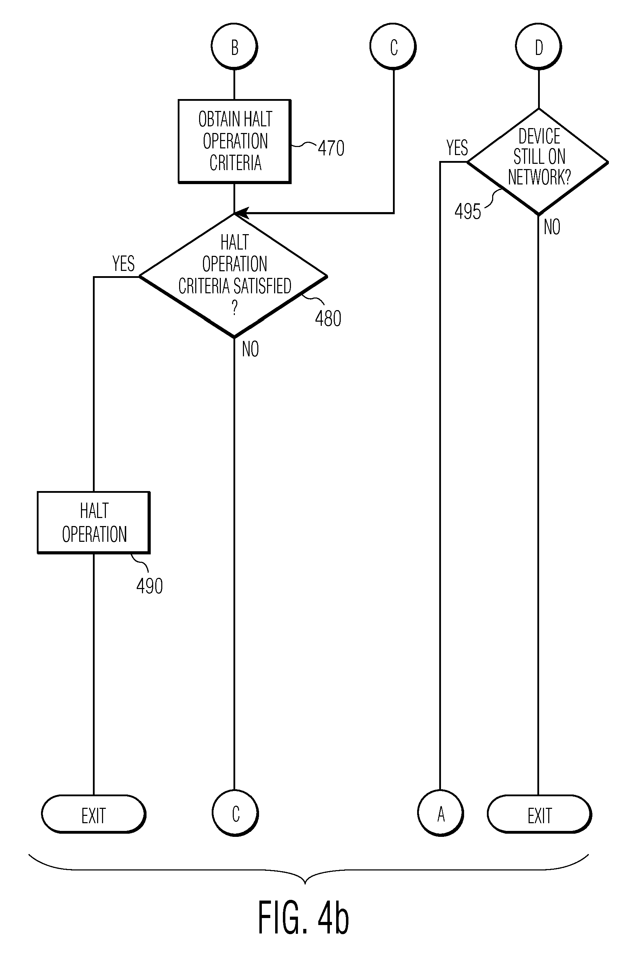

Figs. 4A and 4B together illustrate a flow chart of an exemplary process in accordance with the principles of the invention. In the exemplary processing shown a device newly-added to the network is detected and identified at block 410 (these operations could be performed separately). At block 420 a determination is made whether the device requires special access. If the answer is negative, then access to the network is provided at block 425. Otherwise, at block 430, a criterion (or criteria) (hereinafter, criteria, although for the purpose of this disclosure either could be used), for allowing access to the network for the detected device is obtained. A determination is made at block 440 whether the device satisfies the obtained criteria. If the answer is in the affirmative, then access to the network is effected at block 425.

However, if the answer at block 440 is negative, then an indicator of such failure is provided to a user or display, for example, at block 450. At block 460, a determination is made whether the indicator has been provided for a first predetermined period of time. If the answer is negative, then a determination is made at block 495 whether the device is still connected to the network. If the answer is negative, then processing exits. However, if the answer is in the affirmative, then processing continues at block 460.

If the answer at block 460 is in the affirmative, then criteria for determining halting of the device may be obtained at block 470, and a determination is made at block 480 whether the criteria for halting operation of the detected device have been satisfied. If the answer is negative, then processing continues at block 480. However, if the answer is in the affirmative, then operation of the device is halted at block 490.

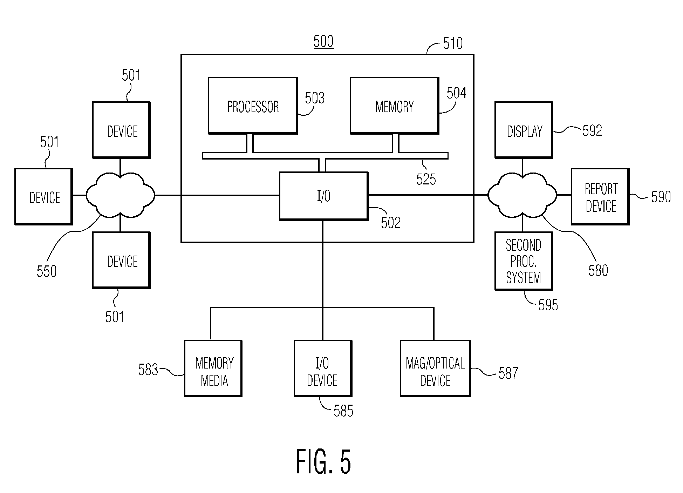

Fig. 5 illustrates a system 500 for implementing the principles of the invention shown herein. In this exemplary system embodiment 500, input data is received from devices 501 over network 550 and is processed in accordance with one or more programs, either software or firmware, executed by processing system 510. The results of processing system 510 may then be transmitted over network 580 for viewing on display 592, reporting device 590 and/or a second processing system 595.

Processing system 510 includes one or more input/output devices 502 that receive data from the illustrated devices 501 over network 550. The received data is then supplied to processor 503, which is in communication with input/output device 502 and memory 504. Input/output devices 502, processor 503 and memory 504 may communicate over a communication medium 525. Communication medium 525 may represent a communication network, e.g., ISA, PCI, PCMCIA bus, one or more internal connections of a circuit, circuit card or other device, as well as portions and combinations of these and other communication media.

Processing system 510 and/or processor 503 may be representative of a handheld calculator, special purpose or general purpose processing system, desktop computer, laptop computer, palm computer, or personal digital assistant (PDA) device, a Body Control Unit, etc., as well as portions or combinations of these and other devices that can perform the operations disclosed.

Processor 503 may be a central processing unit (CPU) or a special purposed processing unit or dedicated hardware/software, such as a PAL, ASIC, FGPA, operable to execute computer instruction code or a combination of code and logical operations. In one embodiment, processor 503 may include, or access, code which, when executed by the processor, performs the operations disclosed herein. As would be understood by those skilled in the art, when a general purpose computer (e.g., a CPU) is loaded with or accesses code to implement the processing taught herein, the execution of the code transforms the general purpose computer into a special purpose computer. The code may be contained in memory 504, may be read or downloaded from a memory medium such as a CD-ROM, flash memory, or floppy disk, represented as 583, may be provided by a manual input device 585, such as a keyboard or a keypad entry, or may be read from a magnetic or optical medium (not shown) or via a second I/O device 587 when needed. Information items provided by devices 583, 585, 587 may be accessible to processor 503 through input/output device 502, as shown. Further, the data received by input/output device 502 may be immediately accessible by processor 503 or may be stored in memory 504. Processor 503 may further provide the results of the processing to display 592, recording device 590 or a second processing unit 595.

As one skilled in the art would recognize, the terms processor, processing system, computer or computer system may represent one or more processing units in communication with one or more memory units and other devices, e.g., peripherals, connected electronically to and communicating with the at least one processing unit. Furthermore, the devices taught herein may be electronically connected to the one or more processing units via internal busses, e.g., serial, parallel, ISA bus, Micro Channel bus, PCI bus, PCMCIA bus, USB, etc., or one or more internal connections of a circuit, circuit card or other device, as well as portions and combinations of these and other communication media, or an external network, e.g., the Internet and Intranet. In other embodiments, hardware circuitry may be used in place of, or in combination with, software instructions to implement the invention. For example, the elements taught herein may also be implemented as discrete hardware elements or may be integrated into a single unit.

As would be understood, the operations illustrated may be performed sequentially or in parallel using different processors to determine specific values. Processing system 510 may also be in two-way communication with each of the sources 505. Processing system 510 may further receive or transmit data over one or more network connections from a server or servers over, e.g., a global computer communications network such as the Internet, Intranet, a wide area network (WAN), a metropolitan area network (MAN), a local area network (LAN), a terrestrial broadcast system, a cable network, a satellite network, a wireless network, or a telephone network (POTS), as well as portions or combinations of these and other types of networks. As will be appreciated, networks 550 and 580 may also be internal networks or one or more internal connections of a circuit, circuit card or other device, as well as portions and combinations of these and other communication media or an external network, e.g., the Internet and Intranet.

While there has been shown, described and pointed out fundamental novel features of the invention as applied to preferred embodiments thereof, it will be understood that various omissions and substitutions and changes in the form and details of the devices illustrated, and in their operation, may be made by those skilled in the art without departing from the spirit of the invention. For example, although the present invention has been discussed with regard to a CAN, it would be understood that the principles of the invention as described herein may be applied to other types of networks, such as FlexRay, which is a known next generation vehicular network that is described in publically-available documents and at the FlexRay Internet website.

Also, it is expressly intended that all combinations of those elements and/or method steps which perform substantially the same function in substantially the same way to achieve the same results are within the scope of the invention.

Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

The present invention has been described with respect to particular embodiments and with reference to certain drawings, but the invention is not limited thereto, but rather, is set forth only by the claims. The drawings described are only schematic and are non-limiting. In the drawings, for illustrative purposes, the size of some of the elements may be exaggerated and not drawn to a particular scale. Where the term "comprising" is used in the present description and claims, it does not exclude other elements or steps. Where an indefinite or definite article is used when referring to a singular noun, e.g. "a" "an" or "the", this includes a plural of that noun unless something otherwise is specifically stated. Hence, the term "comprising" should not be interpreted as being restricted to the items listed thereafter; it does not exclude other elements or steps, and so the scope of the expression "a device comprising items A and B" should not be limited to devices consisting only of components A and B. This expression signifies that, with respect to the present invention, the only relevant components of the device are A and B.

Furthermore, the terms "first", "second", "third" and the like, if used in the description and in the claims, are provided for distinguishing between similar elements and not necessarily for describing a sequential or chronological order. It is to be understood that the terms so used are interchangeable under appropriate circumstances (unless clearly disclosed otherwise) and that the embodiments of the invention described herein are capable of operation in other sequences and/or arrangements than are described or illustrated herein.

## Claims

1. A method for controlling access to a network, the method **characterized by**:
- identifying a component attached to the network (410);
- determining whether the identified component requires special access to the network (420); and
- providing an indication (450) when the identified component is determined to require special access to the network and the identified component fails to satisfy at least one criterion required for such special access to be granted.

2. The method of claim 1, wherein the identification involves ascertaining at least one of: a part number, a manufacturer identification number, a vehicle identification number and a serial number of the component.

3. The method of claim 1, further comprising:
- halting operation of the identified component that fails to satisfy the at least one criterion required for special access after the indication has been provided for a known period of time (460).

4. The method of claim 3, further comprising,
- delaying execution of the halting operation when the halting operation would create a possible risk.

5. The method of claim 1, wherein the step of determining comprises:
- comparing the identification of the identified component with a list of components requiring special access identifications (420).

6. The method of claim 1, wherein the step of determining comprises:
- comparing the identification of the identified component with a list of unacceptable component identifications (420).

7. The method of claim 1, wherein the step of determining is performed at an interface level.

8. The method of claim 1, wherein the step of determining is performed in a processor.

9. An apparatus (500)comprising:
- a processor (503) in communication with a memory (504), the memory including code which when accessed by the processor, causes the processor to carry out a method of any of the preceding claims.

10. A security interface to a network comprising:
- a gate (220) including a first and a second ports, the first port receiving conventional port control signals and the second port receiving limited access control signal;
- a processor (220) for receiving the conventional port control signals and limited control signals; and
- a regulator (220) for determining whether access to the network is to be allowed based on the status of the limited control signals.
